# EUROPEAN PATENT APPLICATION

(11) **EP 4 572 086 A1**
(43) Date of publication of application: **18.06.2025**
(21) Application number: 24213874.1
(22) Date of filing: 19.11.2024
(51) Int. Cl.: H02J 7/00

(54) **BATTERY POWER PACK WITH OVERCHARGING AND NEGATIVE CURRENT SHUTDOWN PROTECTION FEATURE**

(30) Priority: 29.11.2023 US 202363603748 P
(71) Applicant: Milwaukee Electric Tool Corporation, Brookfield, WI 53005-2550 (US)
(72) Inventor: Casper, Maxwell A., Brookfield, WI 53005-2550 (US)
(74) Representative: Grünecker Patent- und Rechtsanwälte PartG mbB

(57) **Abstract**

A battery pack is configured to supply power to a common load and includes a first battery and a second battery. A battery protection circuit is configured to prevent uncontrolled charging of the first or second battery due to a voltage difference between the first and second batteries.

## Description

### FIELD

The present disclosure relates generally to battery power packs that connect to a load such as an electric power tool, and more particularly to a feature to protect the power pack from damage due to component failure or uncontrolled charging.

### BACKGROUND

Portable battery-powered tools may rely on a rechargeable battery pack for power. The battery pack can connect directly to the tool (i.e., inserted into the tool) or may be configured as a self-contained unit that is carried by a user and electrically tethered to the tool, such as a backpack or carry-on battery pack. As the use and convenience of portable tools grows, so does the demand for increased power density and efficiency from these battery packs to provide more power and a longer run time for the tool.

In this regard, the use of lithium-ion (Li-ion) batteries in the battery packs has grown due in large part to the increased power density characteristics of these batteries. Multiple Li-ion batteries may be combined in parallel in the battery packs to increase the capacity of the packs even further.

The parallel configuration of multiple batteries can, however, result in potential issues that must be monitored for and corrected/prevented. For example, when two batteries are placed in parallel, a voltage difference between the batteries can result in one battery charging the other battery. Particularly with Li-ion batteries, this uncontrolled charging between the batteries can result in poor performance, damage, and even failure of the battery pack.

The use of diodes to prevent negative current flow in a circuit (and to protect a battery) is well-known. Diodes, however, result in a relatively large voltage drop that impacts the power supplied to the tool and, thus, can negatively affect performance. In addition, diodes are generally not capable of handling the high current, low voltage power requirements of power tools without significant heat sinking.

The use of back-to-back MOSFETs connected in series between a Li-ion battery pack and the output load is a known configuration in conventional battery protection circuits. An integrated circuit (IC) controls the on/off state of the MOSFETs and the charge and discharge modes of the battery. This configuration for multiple batteries in parallel is, however, susceptible to single point failure and uncontrolled charging of one of the batteries if one of the MOSFETs is damaged or shorted.

It would be desirable to configure a battery protection circuit for a battery pack having multiple batteries that inhibits battery-to-battery charging and protects the batteries in the event that a component failure results in a negative current flow to one of the batteries.

### BRIEF DESCRIPTION

Aspects and advantages of the invention in accordance with the present disclosure will be set forth in part in the following description, or may be obvious from the description, or may be learned through practice of the technology.

In accordance with one embodiment, a battery pack is configured to supply power to a common load, such as a portable power tool. The battery pack includes a first battery, and a second battery. An associated battery protection circuit is configured to prevent uncontrolled charging of the first or second battery due to a voltage difference between the first and second batteries.

In a particular embodiment, the battery protection circuit includes, for each of the first and second batteries, back-to-back MOSFETs in series between the respective battery and the common load. A controller connected to the MOSFETs gates the MOSFETs during a power-supplying mode of the battery pack to prevent the first and second batteries from supplying power in parallel to the common load.

The MOSFETs may be located at a positive high-side of each of the first and second batteries, or at a negative low-side of each of the first and second batteries.

In still another embodiment, the battery protection circuit may also include means for detecting a negative current flow into each of the first and second batteries, which may be due to a failure or short of the one of the MOSFETs.

The detecting means may, in one embodiment, include a shunt resistor in series between the back-to-back MOSFETs of each of the first and second batteries and the common load. The battery protection circuit detects negative current flow through the shut resistors and isolates the first or second battery when negative current flow above a threshold level is detected through the shut resistor associated with the respective first or second battery.

The battery protection circuit may include a comparator circuit configured to generate a latch trip signal that disables high gating of the back-to-back MOSFETs associated with the first or second battery when one or a combination of magnitude and time of the negative current flow exceed the threshold level. In this embodiment, the comparator circuit may include a high current shutdown threshold and a separate low current shutdown threshold. The high current shutdown threshold may include a lesser time duration than the low current shutdown threshold.

In accordance with still other aspects, the present disclosure encompasses a battery pack configured to supply power to a common load, and includes a first battery and a second battery. A battery protection circuit is configured to detect and prevent negative current flow to the first and second batteries during a power-supplying mode of the batteries, thereby preventing uncontrolled charging of the first or second battery due to a voltage difference between the first and second batteries.

In a particular embodiment, the battery protection circuit includes a shunt resistor in series between each of the first and second batteries and the common load, wherein the battery protection circuit detects negative current flow through the shut resistors and isolates the first or second battery when negative current flow above a threshold level is detected through the shut resistor associated with the respective first or second battery.

The battery protection circuit may include a comparator circuit configured to generate a trip signal that isolates the first or second battery when one or a combination of magnitude and time of the negative current flow exceed the threshold level. The comparator circuit may include a high current shutdown threshold and a separate low current shutdown threshold.

The present disclosure also encompasses a method to prevent uncontrolled charging of a battery in a battery pack configured with at least a first and a second battery. The method may include configuring back-to-back MOSFETs in series between each of the first and second batteries and a common load. With a controller connected to the back-to-back MOSFETs, gating of the MOSFETs during a power-supplying mode of the battery pack is controlled to prevent the first and second batteries from supplying power in parallel to the common load. Thus, uncontrolled charging between the first and second batteries due to a voltage difference between the first and second batteries is prevented.

The present disclosure encompasses the various methods and functionalities discussed above and enabled herein.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
Fig. 1 depicts a portable power tool tethered to a backpack having an internal battery pack;
Figs. 2A and 2B are diagrams of a conventional battery protection circuit for a single battery in discharge mode and charge mode, respectively;
Fig. 3 is a diagram of a multi-battery pack with a battery protection circuit in accordance with aspects of the present invention;
Fig. 4 is a diagram of the circuit of Fig. 3 with negative current sensing capability;
Fig. 5 is a diagram of a comparator circuit for use with the negative current protection circuit; and
Fig. 6 is a diagram of an embodiment of the negative current protection.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

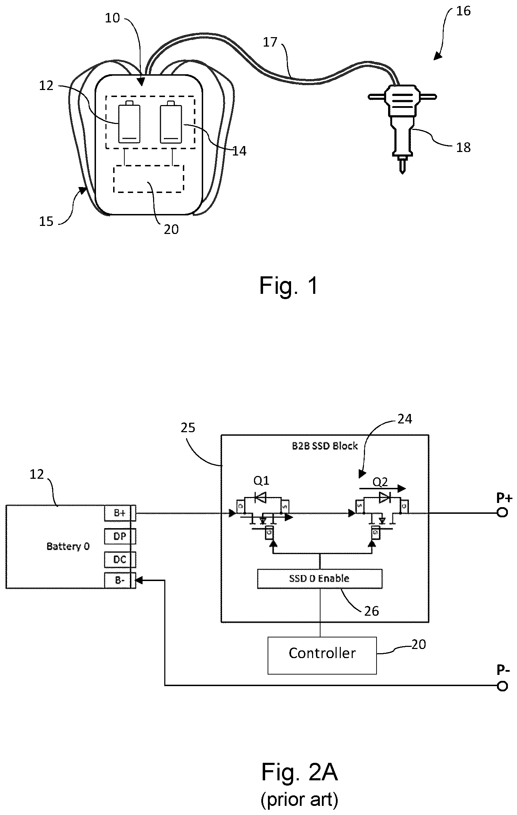

Referring now to Fig. 1, a battery pack 10 having a first battery 12, a second battery 14, and a controller 20 is depicted. The battery pack 10 is configured within a backpack 15 that can be worn by a user and is electrically connected to a power tool 18 via an electrical tether 17 to supply power to the tool 18. Fig. 1 merely depicts a known use of a battery pack 10 and is not intended as a limitation of the invention. It should be appreciated that the battery pack 10 incorporating aspects of the present invention can be configured with any embodiment wherein multiple batteries are provided in parallel to deliver power to a load, such as a power tool.

The batteries 12 and 14 are described herein as Li-ion batteries for ease of explanation only. The present disclosure is not limited to use with Li-ion batteries.

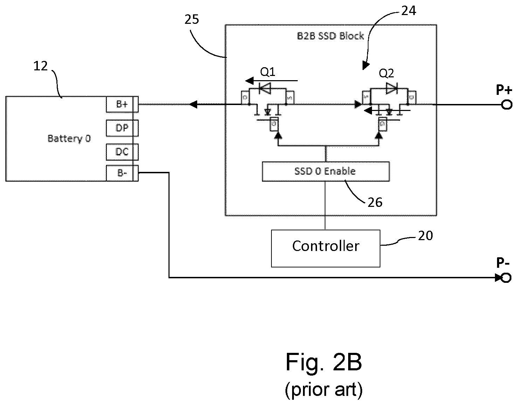

Figs. 2A and 2B depict a configuration of a conventional battery protection circuit that utilizes a back-to-back MOSFET structure 24, and are discussed herein to provide a background reference for the present disclosure.

Referring to Figs. 2A and 2B, the power MOSFETs 24 and driver 26 may be implemented with a solid state drive (SSD) within the controller 20 or otherwise in communication with the controller 20. The MOSFETs are connected in series between the Li-ion battery 12 and the output load. The controller 20 may be a dedicated IC (integrated circuit) used to control gating (i.e., the on and off states) of the MOSFETs 24 for managing the charge and discharge modes of the battery 12. One of the MOSFETs (Q1) is used for discharging the battery to supply power to the load (Fig. 2A) and the other MOSFET (Q2) is used for charging (Fig. 2B) the battery. The MOSFETs 24 are depicted at the positive ("high-end") of the battery 12. In other embodiments, the MOSFETs 24 may be located at the negative ("low-end") of the battery 12. The MOSFETs 24 may be P-channel or N-channel MOSFETs, and the drains may be connected in the back-to-back structure, as depicted in Figs. 2A and 2B.

In the discharge mode of the battery 12 depicted in Fig. 2A, the IC controller 20 provides the gate drive signal to the driver 26 to drive the discharge MOSFET Q1 to the high (on) state. When Q1 is on, the discharge path (indicated by the arrows in the figure) is through Q1, across the parasitic diode around Q2, and to the load. In a certain embodiment, the controller 20 may also turn on Q2 (which has a lower resistance than the parasitic diode around Q2) in order to avoid the conduction loss (voltage drop) from the parasitic diode.

In the charging mode of the battery 12 depicted in Fig. 2B, the IC controller 20 provides the gate drive signal to the driver 26 to drive the charging MOSFET Q2 to the high (on) state. When Q2 is on, the charging path is through Q2, across the parasitic diode around Q1, and to the battery. In a certain embodiment, the controller 20 may also turn on Q1 (which has a lower resistance than the parasitic diode around Q1) in order to avoid the avoid the conduction loss (voltage drop) from the parasitic diode.

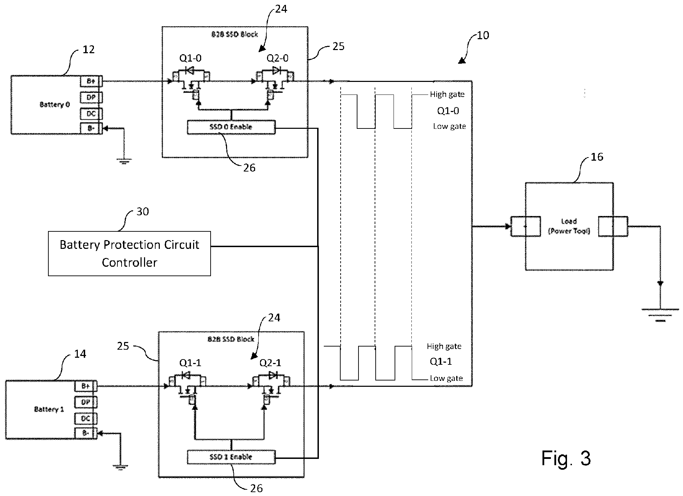

Fig. 3 depicts an embodiment according to the present disclosure for providing battery protection to multiple batteries 12, 14 in a battery pack 10. Each battery 12, 14 is provided with the back-to-back MOSFET structure 24 discussed above at the high-side of the battery. The respective gate drivers 26 are controlled by the controller 30, which may be an IC controller.

Still referring to Fig. 3, if both discharge MOSFETs Q1-0 and Q1-1 are on (gated high) such that the batteries 12, 14 are in a true electrically parallel configuration relative to the common load 16, the possibility exists of and uncontrolled discharge between the batteries 12, 14 if one or both of the charging MOSFETs Q2-0 or Q2-1 shorts and a voltage difference exists between the batteries 12, 14.

In Fig. 3, in accordance with aspects of the present disclosure, the controller 30 coordinates the gating signals to the drivers 26 such that the first and second batteries 12, 14 do not actually supply power in parallel to the common load 16. The gating command signals from the controller 30 are alternately stepped so that the state of the discharge MOSFETs Q1-0 and Q1-1 alternate out-of-synch between the "on" and "off" state, as represented by the gating profiles depicted in Fig. 3. Because the batteries 12, 14 are not supplying power to the common load 16 in a true parallel (simultaneous) mode, this unique control scheme prevents an uncontrolled discharge from one battery 12 or 14 to the other battery 14 or 12 that could result from a voltage difference in the batteries and a failure of one or goth of the charging MOSFETs Q2-0 and Q2-1

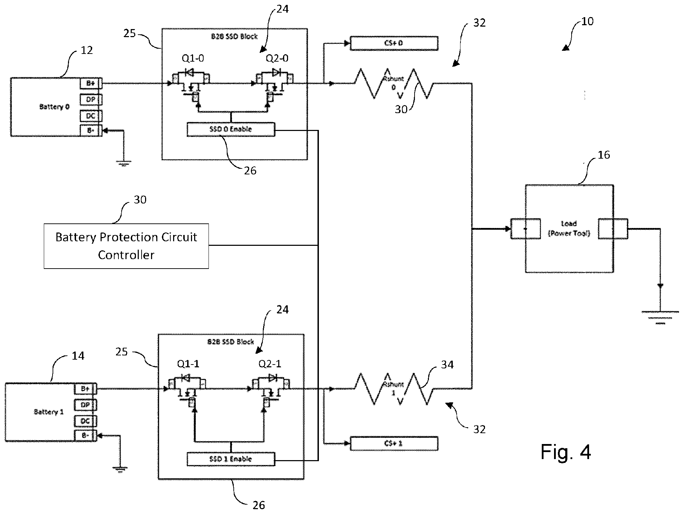

Figs. 4-6 depict an additional battery protection feature that may be combined with the embodiment discussed above or implemented as a stand-alone capability in a multi-battery pack.

Referring to Fig. 4, in an uncontrolled discharge between the batteries 12, 14, current will flow in a negative direction into one of the batteries 12, 14 if a path through or around the back-to-back MOSFET structure 24 is established. This may happen, for example, with a single point failure of one of the charging MOSFETs Q2-0/Q2-1 during the discharge mode. The present disclosure proposes to detect this negative current and isolate one or both of the batteries 12, 14 when the detected negative current exceeds a threshold level.

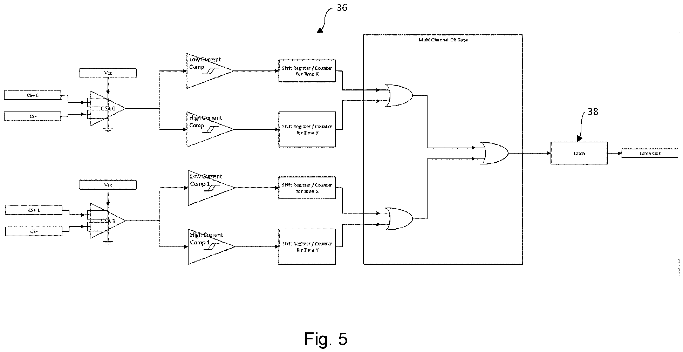

In the embodiment of Fig. 4, the detecting means may include a shunt resistor 26 in series between the back-to-back MOSFETs 24 of each of the first and second batteries 12, 14 and the common load 16. The controller 30 measures negative current flow through the shut resistors 26. Referring to Fig. 5, the value of any detected negative current is input to a comparator circuit 36 and compared against two separate threshold values: a low current comparison and a high current comparison. In the low current comparison, a threshold is established for relatively low negative current values (e.g., greater than 0.5A) having a relatively long duration (e.g., greater than 1ms). In the high current comparison, a threshold is established for relatively high negative current values (e.g., greater than 200A) having a relatively short duration (e.g., greater than 300us). When satisfied, these comparator values are sent to a shift register/counter that, in turn, send a signal to a multi-channel OR gate structure, which generates a signal to latch circuitry 38 when at least one of the comparator events is satisfied for at least one of the battery circuits, as represented in Fig. 5.

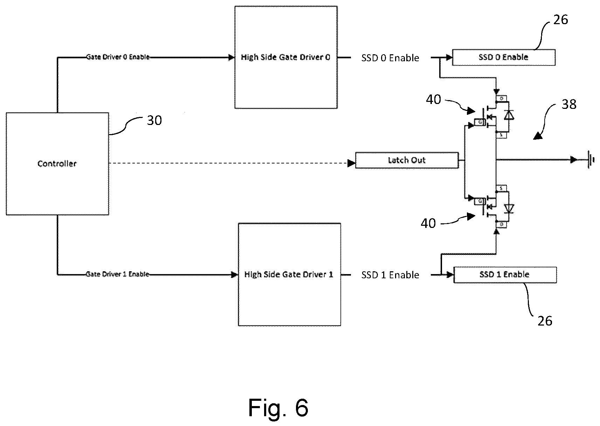

Fig. 6 depicts an embodiment of the latch functionality 38. An enable signal is sent to a "latch out" driver of a pair of MOSFETs 40 having connected gates, wherein each MOSFET 40 is connected upstream of the driver 26 for one of the back-to-back MOSFET structures 24. When the MOSFETs 40 are turned on (gated high) they define a path to ground for each of the drivers 26, which disables the SSD 25 for each battery 12, 14 and prevents current flow into the batteries.

The present invention also encompasses various method embodiments to prevent uncontrolled charging of a battery in a battery pack configured with at least a first and a second battery. The method may include configuring back-to-back MOSFETs in series between each of the first and second batteries and a common load. With a controller connected to the back-to-back MOSFETs, gating of the MOSFETs during a power-supplying mode of the battery pack is controlled to prevent the first and second batteries from supplying power in parallel to the common load. Thus, uncontrolled charging between the first and second batteries due to a voltage difference between the first and second batteries is prevented.

Another method embodiment that may be combined with the previous method or function as a stand-alone method includes detecting a negative current flow into each of the first and second batteries, and isolating one or both of the first and second batteries upon detection of the negative current flow into the respective first or second battery above a threshold level. The method may include detecting the negative current through a shut resistor placed in series between the back-to-back MOSFETs and the common load.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A battery pack configured to supply power to a common load, comprising:
a first battery, and a second battery; and
a battery protection circuit configured to prevent uncontrolled charging of the first or second battery due to a voltage difference between the first and second batteries.

2. The battery pack of claim 1, wherein the battery protection circuit comprises, for each of the first and second batteries, back-to-back MOSFETs in series between the respective battery and the common load, and a controller in communication with gate drivers associated with the MOSFETs during a power-supplying mode of the battery pack to control gating so as to prevent the first and second batteries from supplying power in parallel to the common load.

3. The battery pack of claim 2, wherein the back-to-back MOSFETs are located at a positive high-side of each of the first and second batteries.

4. The battery pack of claim 2, wherein the battery protection circuit further comprises means for detecting a negative current flow into each of the first and second batteries.

5. The battery pack of claim 4, wherein the means for detecting comprises a shunt resistor in series between the back-to-back MOSFETs of each of the first and second batteries and the common load, the battery protection circuit detecting negative current flow through the shunt resistors and isolating the first or second battery when negative current flow above a threshold level is detected through the shunt resistor associated with the respective first or second battery.

6. The battery pack of claim 5, wherein the battery protection circuit comprises a comparator circuit configured to generate a latch trip signal that disables high gating of the back-to-back MOSFETs associated with the first or second battery when one or a combination of magnitude and time of the negative current flow exceed the threshold level.

7. The battery pack of claim 6, wherein the comparator circuit comprises a high current shutdown threshold and a separate low current shutdown threshold.

8. The battery pack of claim 7, wherein the high current shutdown threshold comprises a lesser time duration than the low current shutdown threshold.

9. The battery pack of claim 1, wherein the battery protection circuit is configured to detect and prevent negative current flow to the first and second batteries during a power-supplying mode of the batteries, thereby preventing uncontrolled charging of the first or second battery due to a voltage difference between the first and second batteries.

10. The battery pack of claim 9, wherein the battery protection circuit comprises a shunt resistor in series between each of the first and second batteries and the common load, the battery protection circuit detecting negative current flow through the shut resistors and isolating the first or second battery when negative current flow above a threshold level is detected through the shut resistor associated with the respective first or second battery.

11. The battery pack of claim 10, wherein the battery protection circuit comprises a comparator circuit configured to generate a trip signal that isolates the first or second battery when one or a combination of magnitude and time of the negative current flow exceed the threshold level.

12. The battery pack of claim 11, wherein the comparator circuit comprises a high current shutdown threshold and a separate low current shutdown threshold.

13. A method to prevent uncontrolled charging of a battery in a battery pack configured with at least a first and a second battery, the method comprising:
with a controller connected to back-to-back MOSFETs in series between each of the first battery and the second battery, controlling gating of the back-to-back MOSFETS during a power-supplying mode of the battery pack to prevent the first and second batteries from supplying power in parallel to the common load; and
wherein uncontrolled charging between the first and second batteries due to a voltage difference between the first and second batteries is prevented.

14. The method of claim 13, further comprising detecting a negative current flow into each of the first and second batteries.

15. The method of claim 14, further comprising isolating the first or second battery upon detection of the negative current flow into the respective first or second battery above a threshold level.
